# EUROPEAN PATENT APPLICATION

(11) **EP 0 760 433 A2**
(43) Date of publication of application: **05.03.1997**
(21) Application number: 96306149.4
(22) Date of filing: 22.08.1996
(51) Int. Cl.: F16C 11/06

(54) **Spherical plain bearing with a locking device**

(30) Priority: 22.08.1995 US 517786
(71) Applicant: THE TORRINGTON COMPANY, Torrington, Connecticut 06790 (US)
(72) Inventor: Flanders, Dale P., Torrington Center, CT 06790 (US); Larson, John A., Collinsville, CT 06022 (US)
(74) Representative: Feakins, Graham Allan

(57) **Abstract**

A spherical plain bearing includes a locking collar (24) for preventing rotation of the ball (14) of the spherical plain bearing with respect to a rotating or oscillating shaft (22).

## Description

This invention relates to spherical plain bearings. More particularly this invention is a spherical plain bearing with a locking device.

Locking devices with conventional anti-friction bearings, which of course, include roller or rolling members are known. Anti-friction bearings including locking collars are disclosed in US-A-2,796,304, US-A-3,239,292 and US-A-3,294,459. However, spherical plain bearings with locking collars are not currently known.

With anti-friction bearings, rotation of a shaft with respect to a bearing is intended and wanted. However, with the present plain bearing, rotation of the shaft with respect to the bearing is not wanted. Rather, the shaft and the ball portion of the spherical plain bearing is meant to oscillate and remain aligned. However, when the spherical plain bearing is used with certain equipment the ball will often rotate on the oscillating shaft. This causes wear and tear on the shaft, and wear and tear on the bore of the ball of the spherical plain bearing. This is a particular problem when the spherical plain bearing is used in a bulldozer or certain agricultural equipment where contaminates such as dirt and rocks may get in the space between the shaft and bore of the ball.

According to the present invention, there is provided a spherical plain bearing for use on bulldozers and other heavy equipment comprising a metal annular ring having an annular concave spherical inside surface, and a metal ball mounted within the annular ring and having an annular convex spherical outer surface complementary with the annular concave spherical inside surface; characterised by an axially extending annular extension integral with said ball, the extension being located outside of the annular ring; said ball and said extension having a bore for receiving a shaft; and there being means for preventing rotation of the ball on the shaft.

For a better understanding of the present invention, and to show how the same may be carried into effect, reference will now be made, by way of example, to the accompanying drawing, in which:-
Figure 1 is a cross section of a spherical plain bearing and locking collar mounted on a shaft; and
Figure 2 is a second preferred embodiment in cross section showing a spherical plain bearing and integral locking collar.

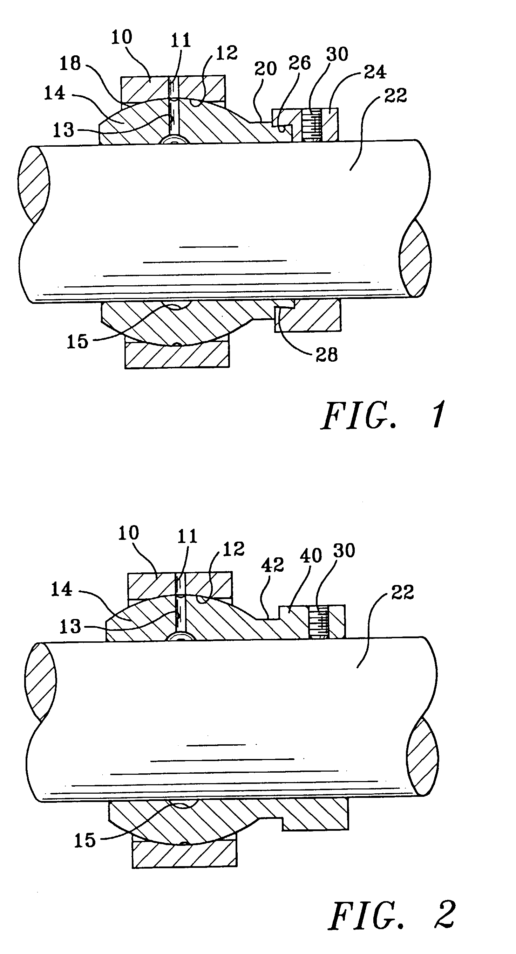

Referring to Figure 1, the spherical plain bearing includes a metal annular ring 10. The annular ring 10 has a concave spherical inside surface 12 in which is located a metal ball 14 having a convex spherical outer surface 18 complementary to the concave spherical inner surface 12 of the annular ring 10.

An annular extension 20 is integral with the ball 14. The extension 20 is located outside of the annular ring 10. The ball 14 and the annular extension 20 have a bore extending through them.

A rotating or oscillating shaft 22 extends through the bore. Means are provided for preventing any rotation of the ball 14 on the shaft 22. This means includes a locking collar 24 mounted about the shaft 22. The locking collar has a radially inwardly extending lip 26 which engages an annular groove 28 on the outside portion of the annular extension 20. The collar 24 is secured to the shaft 22 by set screws, such as set screw 30.

In the embodiment of Figure 2, the locking collar is integral with the annular extension. As shown in Figure 2, the collar 40 is an integral part of the annular extension 42 which in turn is an integral part of the ball 14. Thus, the annular extension 42, the ball 14, and the locking collar 40 are a single piece. This single piece is prevented from rotating with respect to the shaft 22 by one or more set screws 30.

It will be appreciated that, even though the present bearing adds material and additional costs when compared to a spherical plain bearing with no locking collar, it eliminates the subsequent replacement of the shaft and bearing due to excessive wear and tear resulting from the rotation of the ball with respect to the shaft.

## Claims

1. A spherical plain bearing for use on bulldozers and other heavy equipment comprising a metal annular ring (10) having an annular concave spherical inside surface (12), and a metal ball (14) mounted within the annular ring and having an annular convex spherical outer surface (18) complementary with the annular concave spherical inside surface (12); characterised by an axially extending annular extension (20) integral with said ball (14), the extension being located outside of the annular ring (10); said ball and said extension having a bore for receiving a shaft (22); and there being means (24) for preventing rotation of the ball on the shaft.

2. A bearing according to claim 1, wherein the means for preventing rotation of the ball on the shaft comprises a locking collar (24) mounted about the shaft (22).

3. A bearing according to claim 2, wherein the locking collar (24) is a separate piece connected to said annular extension (20).

4. A bearing according to claim 2, wherein the locking collar (40) is integral with the annular extension (42) whereby the ball (14), annular extension (42), and locking collar (40) are a single piece.
